# DEMANDE DE BREVET EUROPEEN

(11) **EP 1 688 283 A1**
(43) Date de publication de la demande: **09.08.2006**
(21) Numéro de dépôt: 06300104.4
(22) Date de dépôt: 03.02.2006
(51) Int. Cl.: B60G 21/055, F16C 27/06, F16F 1/38

(54) **Palier de fixation d'une barre anti-dévers au chasisis d'un véhicule automobile**

(30) Priorité: 07.02.2005 FR 0501195
(71) Demandeur: Peugeot Citroen Automobiles SA, 78140 Vélizy-Villacoublay (FR)
(72) Inventeur: Malavaud, Frank, 83100 Toulon (FR)

(57) **Abrégé**

La présente invention concerne un palier de fixation d'une barre anti-dévers au châssis d'un véhicule automobile.

Le palier est caractérisé en ce qu'il comprend un manchon en matériau élastomère (9), un manchon d'armature (11) en matériau rigide contribuant à une augmentation de la raideur radiale du palier (8) et deux bagues annulaires d'étanchéité en matériau élastomère (12) solidaires du manchon d'armature (11) et de la barre anti-dévers (1) .

L'invention trouve application dans le domaine de l'automobile.

## Description

La présente invention concerne un palier de fixation d'une barre anti-dévers au châssis d'un véhicule automobile.

La barre anti-dévers d'un train avant ou arrière d'un véhicule automobile est fixée au châssis de ce véhicule par deux paliers espacés longitudinalement sur la barre qui est reliée à ses extrémités aux éléments porteurs d'un même essieu du véhicule.

Actuellement, on connaît deux types de paliers : les paliers dits « suiveurs » et les paliers dits « glissants ».

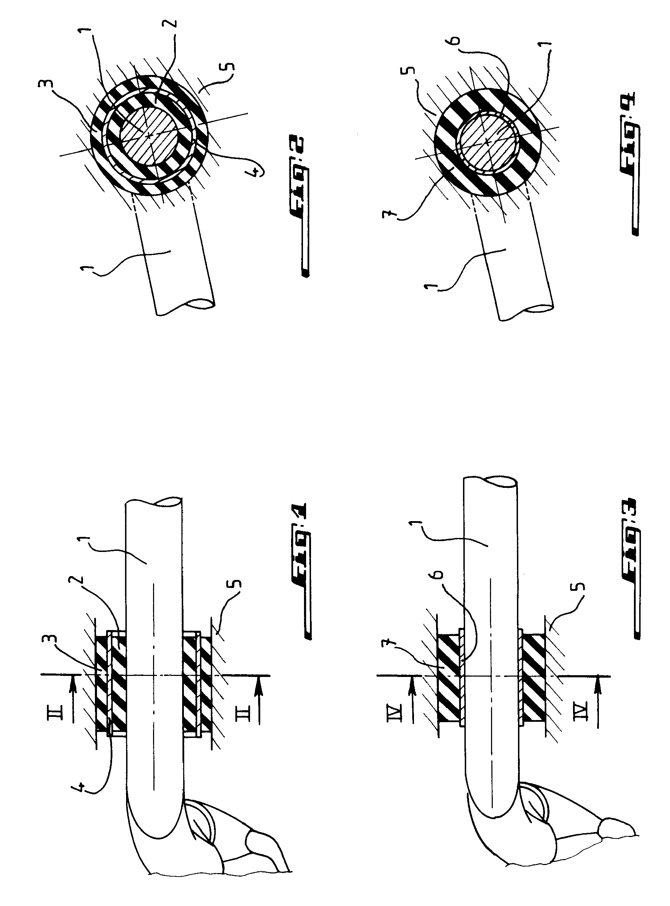

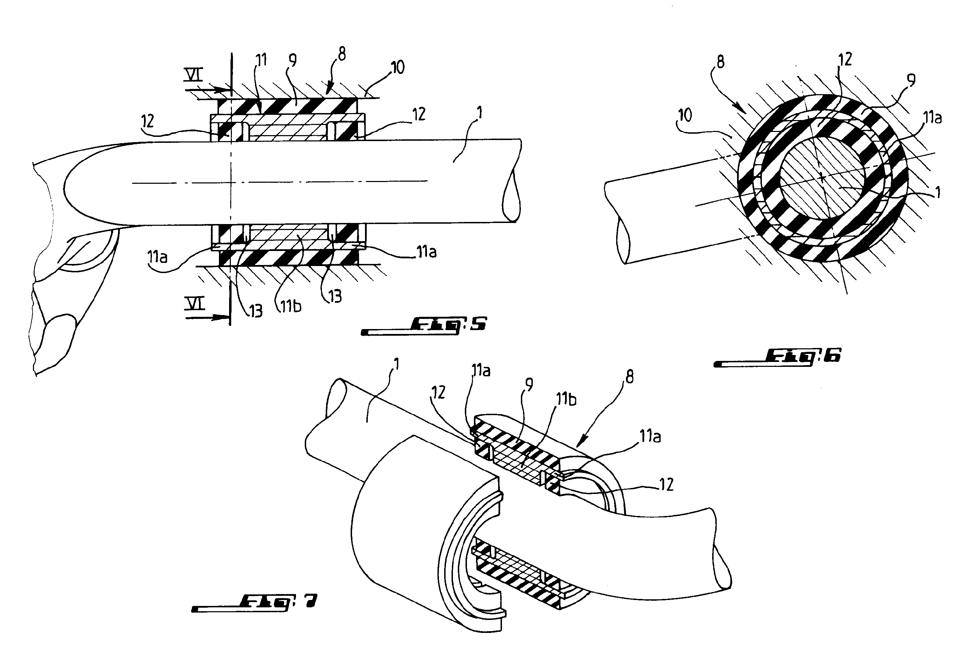

Un exemple de palier suiveur est représenté aux figures 1 et 2. Ce genre de palier travaille en torsion autour de la barre anti-dévers 1 et comprend un premier manchon interne en matériau élastomère 2 solidaire coaxialement de la barre anti-dévers 1, par exemple par collage, un second manchon externe en matériau élastomère 3 monté coaxialement à la barre anti-dévers 1 et un manchon d'armature métallique 4 monté entre les deux manchons interne 2 et externe 3 en étant solidaire de ceux-ci, par exemple par collage. Le manchon externe en élastomère 3 est fixé, par exemple par collage, dans une partie de support correspondante 5 solidaire du châssis, non représenté, du véhicule. Le filtrage des vibrations, la raideur en torsion ainsi que la raideur radiale de ce palier sont assurés notamment par les deux manchons en élastomère 2, 3 de sorte que les seuls paramètres pouvant être changés pour assurer un compromis délicat entre la raideur en torsion et la raideur radiale de ce palier sont le mélange de matériau élastomère utilisé pour ces deux manchons 2, 3, la précharge radiale appliquée à ces manchons et l'utilisation du manchon d'armature intermédiaire 4 qui permet d'augmenter la raideur radiale du palier sans trop augmenter la raideur en torsion de celui-ci.

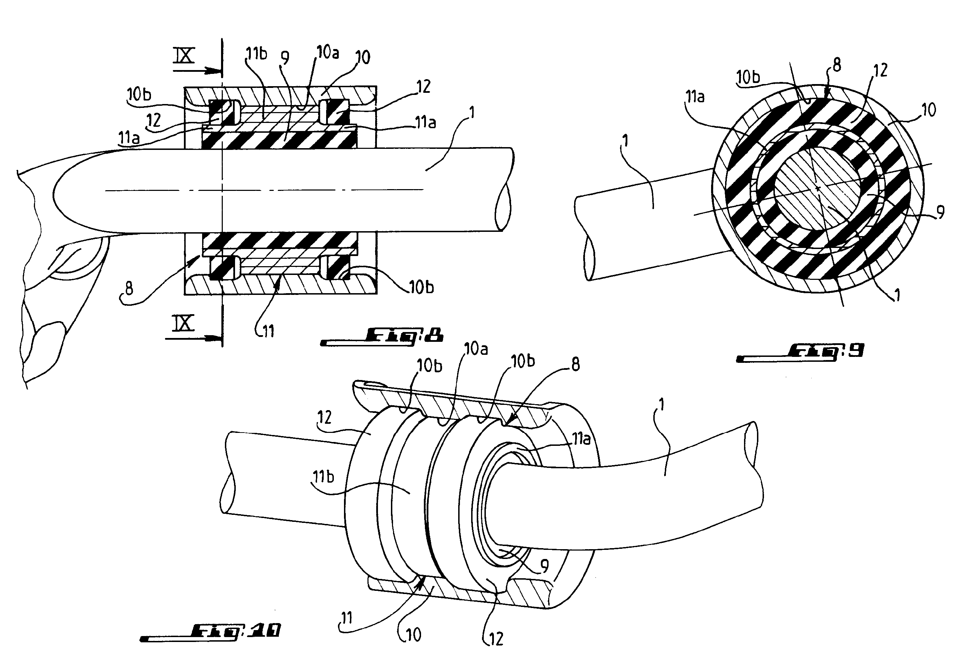

Un palier du type glissant permettant à la barre anti-dévers 1 de glisser dans celui-ci lors des débattements angulaires de la barre, est représenté aux figures 3 et 4. Ce palier comprend ainsi un manchon d'armature métallique 6 monté coaxialement sur la barre anti-dévers 1 et présentant un faible coefficient de frottement à sa surface de contact avec la barre 1 pour assurer une interface glissante et un manchon en matériau élastomère 7 monté autour du manchon métallique 6 en étant solidaire de ce dernier par exemple par collage, le manchon 7 étant également fixé, par exemple par collage, dans une partie du support correspondante 5 solidaire du châssis du véhicule. Le manchon en matériau élastomère 7 remplit les fonctions de filtrage des vibrations et de raideur radiale du palier. Ce palier a pour inconvénient que, pour obtenir une grande raideur radiale avec un minimum d'étanchéité avec le manchon d'armature 6, on applique une précharge radiale au manchon en élastomère 7, ce qui a pour effet d'augmenter l'effort normal à la surface de frottement entre le manchon d'armature 6 et la barre anti-dévers 1 et, par conséquent, d'augmenter le frottement entre ces deux éléments. Pour éliminer cet inconvénient, il est possible de prévoir des toiles en téflon, des bagues en matière plastique et de la graisse pour diminuer le frottement mais dans une certaine limite et avec une durée de vie limitée.

En outre, le palier glissant est très sensible aux projections et écoulements d'eau sale, que l'on rencontre notamment dans un sous-bassement de véhicule, de sorte qu'il est nécessaire d'adapter l'implantation de ce palier dans un milieu non hostile et de prévoir l'étanchéité de ce palier, sinon il y a un risque important d'endommagement et de dégradation du palier si on l'implante dans un sous-bassement du véhicule, notamment près d'une roue de celui-ci.

La présente invention a pour but d'éliminer les inconvénients ci-dessus des paliers suiveurs et glissants de l'art antérieur en réalisant un genre de palier mixte ayant une bonne capacité à filtrer les vibrations, présentant une grande raideur radiale ainsi qu'une faible raideur en torsion ou un faible coefficient de frottement pour le débattement angulaire de la barre anti-dévers.

A cet effet, selon l'invention, le palier de fixation d'une barre anti-dévers au châssis d'un véhicule automobile est caractérisé en ce qu'il comprend, montés coaxialement à la barre anti-dévers entre cette dernière et une partie du châssis supportant le palier en étant solidaires l'un à l'autre, un manchon en matériau élastomère d'une raideur radiale déterminée, et un manchon d'armature en matériau rigide contribuant à une augmentation de la raideur radiale du palier et ayant un coefficient de frottement relativement faible dans sa zone de contact avec la partie de support du palier ou avec la barre anti-dévers, et en ce qu'il comprend en outre deux bagues annulaires d'étanchéité en matériau élastomère coaxiales à la barre anti-dévers et solidaires d'une part respectivement des deux extrémités du manchon d'armature et d'autre part de la barre anti-dévers ou de la partie de support du palier, les deux bagues annulaires ayant une raideur en torsion permettant le débattement de la barre anti-dévers.

Les deux bagues annulaires sont montées radialement précontraintes entre le manchon d'armature et la barre anti-dévers ou la partie de support du palier.

Lorsque le manchon d'armature est monté glissant sur la barre anti-dévers et le manchon en élastomère est solidaire de la partie de support du palier, chaque bague annulaire est logée dans une cavité interne conjuguée d'extrémité du manchon d'armature en étant en appui autour de la barre anti-dévers.

Le manchon en élastomère est fixé dans la partie de support et sur le manchon d'armature par collage ou par simple compression radiale du manchon en élastomère entre la partie de support et le manchon d'armature.

Chaque bague annulaire est fixée dans l'extrémité correspondante du manchon d'armature et sur la barre anti-dévers par collage ou par simple compression radiale de la bague entre le manchon d'armature et la barre anti-dévers.

En variante, lorsque le manchon d'armature est monté glissant dans la partie de support du palier et le manchon en élastomère est solidaire de la barre anti-dévers, chaque bague annulaire est montée coaxialement sur une partie d'extrémité cylindrique du manchon d'armature.

Le manchon en élastomère est fixé dans le manchon d'armature et sur la barre anti-dévers par collage ou par simple compression radiale du manchon en élastomère entre le manchon d'armature et la barre anti-dévers.

Chaque bague annulaire est fixée sur la partie d'extrémité cylindrique correspondante du manchon d'armature et dans la partie de support du palier par collage ou par simple compression radiale de la bague entre la partie de support et la partie d'extrémité cylindrique.

Avantageusement, le manchon d'armature est métallique.

Le manchon élastomère participe également en partie à la raideur en torsion avec les deux bagues annulaires tout en assurant la fonction de filtrage de vibrations.

L'invention vise également une barre anti-dévers de véhicule automobile et qui est caractérisée en ce qu'elle est fixée au châssis du véhicule par deux paliers espacés longitudinalement sur la barre, chaque palier étant conforme à la description qui en a été faite précédemment.

L'invention sera mieux comprise et d'autres buts, caractéristiques, détails et avantages de celle-ci apparaîtront plus clairement de la description explicative qui va suivre faite en référence aux dessins annexés donnés uniquement à titre d'exemple illustrant deux modes de réalisation de l'invention et dans lesquels :
- la figure 1 est une vue en coupe longitudinale d'un palier suiveur pour barre anti-dévers de véhicule automobile suivant l'art antérieur ;
- la figure 2 est une vue en coupe suivant la ligne II-II de la figure 1 ;
- la figure 3 est une vue en coupe longitudinale d'un palier glissant pour barre anti-dévers de véhicule automobile suivant l'art antérieur ;
- la figure 4 est une vue en coupe suivant la ligne IV-IV de la figure 3 ;
- la figure 5 est une vue en coupe longitudinale d'un palier mixte pour barre anti-dévers de véhicule automobile suivant un premier mode de réalisation de l'invention ;
- la figure 6 est une vue en coupe suivant la ligne VI-VI de la figure 5 ;
- la figure 7 est une vue en perspective éclatée du palier mixte des figures 5 et 6 ;
- la figure 8 est une vue en coupe longitudinale d'un palier mixte pour barre anti-dévers de véhicule automobile suivant un second mode de réalisation de l'invention ;
- la figure 9 est une vue en coupe suivant la ligne IX-IX de la figure 8 ; et
- la figure 10 est une vue en perspective en coupe partielle du palier mixte des figures 8 et 9.

Les figures 5 à 7 représentent un premier mode de réalisation d'un palier mixte de l'invention pour une barre anti-dévers d'un véhicule automobile.

Comme cela est connu en soi, la barre anti-dévers 1, qui peut être celle d'un train avant ou d'un train arrière d'un véhicule automobile, est fixée au châssis, non représenté, du véhicule par deux paliers 8, dont un seul est représenté, espacés longitudinalement sur la barre 1, qui est reliée à ses extrémités aux éléments porteurs d'un même essieu du véhicule.

Chaque palier 8 de l'invention comprend un manchon en élastomère 9 d'une raideur radiale déterminée de manière à participer en partie à la raideur radiale du palier 8 et qui est monté solidairement dans une partie conjuguée correspondante de support 10 solidaire du châssis du véhicule.

Le palier 8 comprend en outre un manchon d'armature 11 en matériau rigide, de préférence à base de métal, monté coaxialement sur la barre anti-dévers 1 et dans le manchon 9, le manchon d'armature 11 contribuant à une augmentation de la raideur radiale du palier 8 comme dans un palier suiveur connu.

Le manchon en élastomère 9 est fixé coaxialement sur le manchon d'armature 11 et dans la partie de support 10 soit par collage, soit tout simplement par compression radiale de ce manchon entre la partie de support 10 et le manchon d'armature 11.

Ce dernier présente un coefficient de frottement relativement faible dans sa zone de contact avec la barre anti-dévers 1 pour constituer une interface glissante, comme dans un palier glissant connu.

Le palier 8 comprend également deux bagues annulaires d'étanchéité en matériau élastomère 12 montées coaxialement sur la barre anti-dévers 1 en étant espacées longitudinalement sur celle-ci et solidaires d'une part respectivement des deux extrémités du manchon d'armature 11 et d'autre part de la barre anti-dévers 1.

Plus précisément, chaque bague annulaire 12 est logée dans une cavité circulaire interne d'extrémité 13 du manchon d'armature 11 en étant en appui autour de la barre anti-dévers 1. Chaque cavité 13 est délimitée par une paroi d'extrémité cylindrique 11a du manchon d'armature 11 et concentrique à la barre anti-dévers 1, la paroi 11a prolongeant la partie pleine centrale 11b du manchon 11 en contact glissant avec la barre anti-dévers 1.

Avantageusement, les deux bagues annulaires 12 sont montées radialement précontraintes entre le manchon d'armature 11 et la barre anti-dévers 1 de manière à contribuer à la diminution du frottement entre le manchon d'armature 11 et la barre anti-dévers 1, la précharge radiale exercée sur chaque bague annulaire 12 étant en opposition à l'effort normal à la surface de frottement entre le manchon d'armature 11 et la barre anti-dévers 1. Chaque bague 12 est fixée dans la paroi d'extrémité 11a du manchon 11 et sur la barre anti-dévers 1 soit par collage soit tout simplement par compression radiale de la bague 12 entre le manchon 11 et la barre anti-dévers 1.

L'architecture ci-dessus décrite du palier 8 du premier mode de réalisation est telle que, lorsque la barre anti-dévers 1 débat angulairement autour de son axe par rapport au châssis du véhicule, le manchon en élastomère 9 ne glisse pas par rapport à la partie du support 10 solidaire du châssis et par rapport au manchon d'armature 11, la barre anti-dévers 1 glisse relativement à la partie centrale 11b du manchon d'armature 11, qui est fonctionnellement de raideur radiale plus élevée que le manchon en élastomère 9 et dont le coefficient de frottement est plus faible que celui du manchon en élastomère 9, et les deux bagues annulaires 12 ne glissent pas par rapport à la barre anti-dévers 1 et par rapport au manchon d'armature 11.

Selon le second mode de réalisation du palier 8 représenté aux figures 8 à 10, le manchon en élastomère 9 est monté coaxialement sur la barre anti-dévers 1 et logé dans le manchon d'armature 11 sur toute la longueur de ce dernier, le manchon 9 étant solidaire de la barre 1 et du manchon 11 par collage ou tout simplement par compression radiale du manchon 9 entre le manchon d'armature 11 et la barre anti-dévers 1.

La partie centrale 11b du manchon d'armature métallique 11 est montée en contact glissant, à faible coefficient de frottement, dans l'alésage 10a de la partie de support 10 du palier 8 solidaire du châssis du véhicule.

Les deux bagues annulaires en matériau élastomère 12 sont montées respectivement sur deux parties d'extrémités cylindriques 11a du manchon 11 prolongeant la partie centrale 11b de ce manchon à l'opposé de la zone de contact glissant du manchon 11 avec la partie du support 10, les deux parties cylindriques d'extrémité 11a étant concentriques à la barre anti-dévers 11 en entourant le manchon en élastomère 9.

Chaque bague annulaire 12 est en outre logée à l'opposé de la partie d'extrémité cylindrique correspondante 11a dans une gorge radialement interne 10b de la pièce de support cylindrique 10 et, de préférence, est radialement précontrainte entre la paroi 11a et la pièce du support 10 pour contribuer à la diminution du frottement entre le manchon d'armature 11 et la partie 10 comme déjà expliqué en relation avec le premier mode de réalisation du palier 8. Chaque bague 12 est fixée sur la partie d'extrémité correspondante 11a du manchon 11 et dans la gorge 10b de la pièce 10 par collage ou par simple compression radiale de la bague 12 entre la partie d'extrémité 11a et la gorge 10b de la pièce 10.

Le palier 8 conforme au second mode de réalisation de l'invention permet de réaliser une adhérisation de ce palier sur la barre anti-dévers 1 par l'intermédiaire du manchon en élastomère 9.

Pour résumer du point de vue fonctionnement l'architecture du palier 8 faisant l'objet des premier et second modes de réalisation, le manchon en matériau élastomère 9 réalise le filtrage des vibrations, une partie de la raideur radiale et une très légère partie de la raideur en torsion du palier 8, le manchon d'armature 11 réalise l'interface glissante, comme dans un palier glissant, et l'augmentation de la raideur radiale du palier 8, comme dans un palier suiveur, et les deux bagues annulaires en matériau élastomère 12 assurent l'étanchéité du palier 8, la majeure partie de la raideur en torsion de ce palier, et contribuent à la diminution du frottement de la surface de contact entre le manchon d'armature 11 et la barre anti-dévers 1 ou la partie de support 10 si on applique une précharge radiale sur les deux bagues 12 en opposition de l'effort normal à la surface de frottement.

L'architecture de palier ou d'articulation ci-dessus décrite dans chacun des deux modes de réalisation permet ainsi de désolidariser les fonctions des raideur radiale/raideur en torsion et raideur radiale (précharge)/frottement. Le palier mixte de l'invention permet de réaliser une architecture de palier plus fonctionnelle que celle des paliers suiveurs et glissants actuellement utilisés. Cette architecture permet d'atteindre un meilleur niveau de prestations, notamment recherché pour les liaisons au sol, et à un coût sensiblement équivalent. Un autre avantage du palier conforme à l'invention est le potentiel offert par le manchon d'armature qui peut reprendre des efforts axiaux et donc traiter, si besoin est, l'anticheminement de la barre anti-dévers, en adaptant la pièce en interface avec le manchon d'armature.

## Revendications

1. Palier de fixation d'une barre anti-dévers (1) au châssis d'un véhicule automobile, **caractérisé en ce qu'**il comprend, montés co-axialement à la barre anti-dévers (1) entre cette dernière et une partie (10) du châssis supportant le palier (8) en étant solidaires l'un à l'autre, un manchon en matériau élastomère (9) d'une raideur radiale déterminée et un manchon d'armature en matériau rigide (11) contribuant à une augmentation de la raideur radiale du palier (8) et ayant un coefficient de frottement relativement faible dans sa zone de contact avec la partie de support (10) du palier (8) ou avec la barre anti-dévers (1), et **en ce qu'**il comprend en outre deux bagues annulaires d'étanchéité en matériau élastomère (12) coaxiales à la barre anti-dévers (1) et solidaires d'une part respectivement des deux extrémités du manchon d'armature (11) et d'autre part de la barre anti-dévers (1) ou de la partie de support (10) du palier (8), les deux bagues (12) ayant une raideur en torsion permettant le débattement de la barre anti-dévers (1).

2. Palier selon la revendication 1, **caractérisé en ce que** les deux bagues annulaires (12) sont montées radialement précontraintes entre le manchon d'armature (11) et la barre anti-dévers (1) ou la partie de support (10) du palier (8).

3. Palier selon la revendication 1 ou 2, **caractérisé en ce que**, lorsque le manchon d'armature (11) est monté glissant sur la barre anti-dévers (1) et le manchon en élastomère (9) est solidaire de la partie de support (10) du palier (8), chaque bague annulaire (12) est logée dans une cavité conjuguée interne d'extrémité (13) du manchon d'armature (11) en étant en appui autour de la barre anti-dévers (1).

4. Palier selon la revendication 3, **caractérisé en ce que** le manchon en élastomère (9) est fixé dans la partie de support (10) et sur le manchon d'armature (11) par collage ou par simple compression radiale du manchon en élastomère (9) entre la partie de support (10) et le manchon d'armature (11).

5. Palier selon la revendication 3 ou 4, **caractérisé en ce que** chaque bague annulaire (12) est fixée dans l'extrémité correspondante du manchon d'armature (11) et sur la barre anti-dévers (1) par collage ou par simple compression radiale de la bague (12) entre le manchon d'armature (11) et la barre anti-dévers (1).

6. Palier selon la revendication 1 ou 2, **caractérisé en ce que**, lorsque le manchon d'armature (11) est monté glissant dans la partie de support (10) du palier (8) et le manchon en élastomère (9) est solidaire de la barre anti-dévers (1), chaque bague annulaire (12) est montée coaxialement sur une partie d'extrémité cylindrique (11a) du manchon d'armature (11).

7. Palier selon la revendication 6, **caractérisé en ce que** le manchon en élastomère (9) est fixé dans le manchon d'armature (11) et sur la barre anti-dévers (1) par collage ou par simple compression radiale du manchon en élastomère (9) entre le manchon d'armature (11) et la barre anti-dévers (1).

8. Palier selon la revendication 6 ou 7, **caractérisé en ce que** chaque bague annulaire (12) est fixée sur la partie d'extrémité cylindrique correspondante (11a) du manchon d'armature (11) et dans la partie de support (10) du palier (8) par collage ou par simple compression radiale de la bague (12) entre la partie de support (10) et la partie d'extrémité cylindrique (11a).

9. Palier selon l'une des revendications précédentes, **caractérisé en ce que** le manchon d'armature (11) est métallique.

10. Palier selon l'une des revendications précédentes, **caractérisé en ce que** le manchon en élastomère (9) participe également en partie à la raideur en torsion avec les deux bagues annulaires (12) tout en assurant la fonction de filtrage de vibrations.

11. Barre anti-dévers de véhicule automobile, **caractérisée en ce qu'**elle est fixée au châssis du véhicule par deux paliers (8) espacés longitudinalement sur la barre (1) et chacun conforme à l'une quelconque des revendications précédentes.
